# EUROPÄISCHE PATENTSCHRIFT

(11) **EP 3 274 070 B1**
(45) Veröffentlichungstag und Bekanntmachung des Hinweises auf die Patenterteilung: **13.03.2019**
(21) Anmeldenummer: 16709690.8
(22) Anmeldetag: 25.02.2016
(51) Int. Cl.: B01D 45/08, B05B 14/40

(54) **VORRICHTUNG UND VERFAHREN ZUM ABSCHEIDEN VON PARTIKELN AUS EINEM LUFTSTROM**
DEVICE AND METHOD FOR SEPARATING PARTICLES FROM AN AIR FLOW
DISPOSITIF ET PROCÉDÉ DESTINÉS À SÉPARER DES PARTICULES D'UN FLUX D'AIR

(30) Priorität: 26.02.2015 AT 501532015
(43) Veröffentlichungstag der Anmeldung: 31.01.2018
(73) Patentinhaber: AUTOMOTIVE ENGINEERING CORPORATION, Nankai District Tianjin (CN); SCIVIC Engineering Corporation, Jianxi District Luoyang (CN)
(72) Erfinder: FEHBERGER, Alex, 8724 Spielberg (AT); KLADE, Bernhard, 75378 Bad Liebenzell (DE)
(74) Vertreter: Wirnsberger & Lerchbaum Patentanwälte OG
(86) Internationale Anmeldenummer: PCT/AT2016/050043
(87) Internationale Veröffentlichungsnummer: WO 2016/134398

(56) Entgegenhaltungen:
- EP-A1- 0 375 357
- EP-A1- 0 884 083
- DE-A1-102007 036 551
- DE-A1-102010 008 948
- DE-A1-102011 108 631
- DE-C- 216 483
- DE-C- 552 723
- JP-U- S5 254 081
- US-A- 1 521 348
- US-A- 3 932 151

## Beschreibung

Die Erfindung betrifft eine Vorrichtung zum Abscheiden von Partikeln, insbesondere Lackpartikeln, aus einem Luftstrom, umfassend mehrere Abscheidungslagen mit jeweils mehreren Abscheidungselementen.

Weiter betrifft die Erfindungen ein Verfahren zum Abscheiden von Partikeln, insbesondere Lackpartikeln, aus einem Luftstrom, wobei die Partikel auf jeweils mehreren Abscheidungselementen von mehreren Abscheidungslagen abgeschieden werden.

Die Erfindung betrifft eine weitere Vorrichtung zum Abscheiden von Partikeln, insbesondere Lackpartikeln, aus einem Luftstrom, umfassend mehrere Abscheidungslagen mit jeweils mehreren Abscheidungselementen.

Darüber hinaus betrifft die Erfindung eine Verwendung solcher Vorrichtungen.

Weiter betrifft die Erfindung ein weiteres Verfahren zum Abscheiden von Partikeln, insbesondere Lackpartikeln, aus einem Luftstrom, wobei die Partikel auf jeweils mehreren Abscheidungselementen von mehreren Abscheidungslagen abgeschieden werden.

In mehreren Bereichen der Technik wird Luft bzw. ein Luftstrom mit unerwünschten und/oder giftigen Partikeln verunreinigt wie beispielsweise beim Lackieren von Fahrzeugen.

Bei einem solchen Lackiervorgang von Fahrzeugen bzw. Fahrzeugbestandteilen ist es üblicherweise nicht möglich, alle Lackpartikel auf den zu lackierenden Teilen abzuscheiden. Deshalb ist die Luft auch nach einem abgeschlossenen Lackiervorgang stets mit unter Umständen giftigen Lackpartikeln verunreinigt, was als "Overspray" bezeichnet wird. Vor einem Zuführen dieser Luft zur Umgebungsluft müssen die Lackpartikel aus derselben entfernt werden.

Aus dem Stand der Technik sind Vorrichtungen zum Entfernen bzw. Abscheiden von Lackpartikeln aus Luft bzw. einem Luftstrom bekannt. Diese können beispielsweise mit chemischen Filterelementen arbeiten, was aufwendig und teuer sein kann. Weiter ist auch eine Möglichkeit bekannt, Lackpartikel mit Trennmitteln wie Wasser und/oder Steinmehl aus Luft abzuscheiden, was relativ umständlich und arbeitsintensiv ist. Darüber hinaus sind beispielsweise Filtereinrichtungen bekannt, welche zum Abscheiden von Lackpartikeln aus der Luft mehrere u-förmige Elemente umfassen. Dabei wird eine Strömungsgeschwindigkeit der Luft so verändert, dass die Lackpartikel aus der Luft gefiltert werden und sich in den u-förmigen Elementen sammeln. Eine solche Vorrichtung hat jedoch den Nachteil, dass die in den u-förmigen Elementen abgelagerten Lackpartikel nur mit großem Aufwand von dort entfernbar sind.

Dokumente EP 0375 357 A1, EP 0 884 083 A1, EP 0 884 083 A1 offenbaren den Stand der Technik bezüglich Vorrichtungen zum Abscheiden von Lackpartikeln.

Aufgabe der Erfindung ist es, eine Vorrichtung der eingangs genannten Art anzugeben, welche ein einfaches sowie effizientes Abscheiden von Partikeln aus einem Luftstrom ermöglicht.

Ein weiteres Ziel ist es, eine Verwendung einer solchen Vorrichtung anzugeben.

Weiter ist es Ziel, ein Verfahren der eingangs genannten Art anzugeben, mit welchem Partikel einfach und effizient aus einem Luftstrom abgeschieden werden.

Die Aufgabe wird erfindungsgemäß dadurch gelöst, dass bei einer Vorrichtung der eingangs genannten Art die Abscheidungselemente als längliche Balken ausgebildet und voneinander beabstandet angeordnet sind, wobei die Balken zweier Abscheidungslagen versetzt zueinander angeordnet sind, um den Luftstrom zwischen den Abscheidungslagen umzulenken, und dass eine Lackentfernungseinrichtung zum Reinigen der Balken vorgesehen ist, welche entlang der Balken verfahrbare Kolben umfasst und die Anzahl der Kolben der Anzahl der Balken entspricht, wobei die Balken einen im Wesentlichen u-förmigen Querschnitt aufweisen, um abgeschiedene Partikel darin zu sammeln.

Ein mit der Erfindung erzielter Vorteil ist insbesondere darin zu sehen, dass einerseits ein Luftstrom durch die Balken so umlenkbar ist, dass die Partikel, welche im Allgemeinen schwerer sind als die Luftpartikel des restlichen Luftstromes, an den Balken abscheidbar und andererseits die Balken durch die Lackentfernungseinrichtung effizient reinigbar sind. Insbesondere sind Balken von zwei benachbarten Abscheidungslagen versetzt zueinander angeordnet. Erfindungsgemäß können beliebig viele Abscheidungslagen angeordnet sein, günstig ist es jedoch, wenn zumindest zwei vorgesehen sind, welche insbesondere versetzt zueinander angeordnet sind. Ferner können diese schichtartig hintereinander angeordnet sein. Die Balken sind bevorzugt parallel zueinander und beabstandet voneinander angeordnet, wobei ein zwischen jeweils zwei Balken ausgebildeter Abstand bevorzugt weniger breit sein kann als die Balken selbst. Um ein möglichst gleichmäßiges Abscheiden von Partikeln auf allen Balken zu ermöglichen, sind diese bevorzugt baugleich ausgebildet. Die Abstände zwischen den Balken geben eine Strömungsrichtung des Luftstromes vor und beeinflussen auch dessen Geschwindigkeit. Durch eine erfindungsgemäße Vorrichtung ist ein rein mechanisches Abscheiden von Partikeln aus einem Luftstrom möglich, insbesondere ohne eine Verwendung von chemischen Zusätzen.

Von Vorteil ist es darüber hinaus, wenn die Lackentfernungseinrichtung zum Abscheiden der Partikel weder Wasser noch Trennmittel oder Steinmehl benötigt, sondern die Partikel rein mechanisch mit der Lackentfernungseinrichtung von den Balken entfernbar sind. Der mit der Lackentfernungseinrichtung entfernte Lack bzw. die Partikel sind in weiterer Folge pulverisierbar und/oder für die Herstellung von minderwertigen Lacken wiederverwendbar. Die Partikel sind getrennt vom restlichen Luftstrom aus der Vorrichtung abführbar.

Die Balken weisen einen im Wesentlichen u-förmigen Querschnitt auf, um abgeschiedene Partikel darin zu sammeln. Eine Strömungsrichtung des Luftstromes mit den Partikeln erfolgt hierbei gegen die u-förmigen Balken, sodass Partikel einfach und effizient innerhalb der u-förmigen Mulden ablagerbar sind und bis zu einer Entfernung derselben dort verweilen. Hierbei kann es weiter günstig sein, wenn eine Strömungsrichtung vertikal von oben nach unten, unter Einwirkung der Schwerkraft, erfolgt. Die Balken der Vorrichtung sind entsprechend bevorzugt horizontal angeordnet. Günstig ist es, wenn die Balken zwischen zwei Platten eingefasst sind. Die Platten sind als Lochplatten ausgebildet, wobei eine Anzahl von Aussparungen in derselben einer Anzahl an Balken entspricht. Die jeweiligen Enden der Balken sind weiter so an den Platten fixiert, dass diese die Aussparungen teilweise umschließen. Beispielsweise sind die Balken zwischen den Platten eingeklemmt oder können mit diesen verschweißt sein.

Erfindungsgemäß umfasst die Lackentfernungseinrichtung entlang der Balken verfahrbare Kolben und die Anzahl der Kolben entspricht der Anzahl der Balken. Die Kolben passen etwa formschlüssig in die u-förmigen Balken, sodass diese in denselben verfahrbar und dadurch die darin abgelagerten Partikel entfernbar sind. Die Lackpartikel sind somit mit den Kolben aus den jeweiligen Balken ausdrückbar bzw. hinausschiebbar.

Von Vorteil ist es weiter, wenn die Kolben mit einem Ende an einem plattenförmigen Element fixiert sind, wobei das plattenförmige Element mit den Kolben in Richtung einer ersten Platte verfahrbar ist. Bevorzugt sind die Kolben mit dem plattenförmigen Element verschraubt. Bei einem vollständig ausgefahrenen Zustand entspricht ein Abstand zwischen dem plattenförmigen Element und einer ersten Platte etwa einer Länge der Kolben. Das plattenförmige Element ist in Richtung der ersten Platte verfahrbar, sodass die Kolben vollständig zwischen den Platten angeordnet sind. Die Kolben schieben dabei die auf den Balken abgelagerten Partikel aus diesen heraus, wodurch die Balken gereinigt werden. In einem eingefahren Zustand steht das plattenförmige Element also an der ersten Platte an.

Zweckmäßigerweise sind ein Motor und zumindest eine Welle vorgesehen, wobei der Motor die Welle antreibt, um das plattenförmige Element mit den Kolben zu bewegen. Der Motor ist bevorzugt am plattenförmigen Element befestigt, wobei dieser gegenüber den Kolben bzw. auf einer anderen Seite des plattenförmigen Elementes angeordnet ist. Die zumindest eine Welle ist bevorzugt mittelbar über z. B. ein Band oder eine Kette angetrieben. Insbesondere sind vier als Spindel ausgebildete Wellen vorgesehen, welche das plattenförmige Element mit den Platten verbinden und über welche das plattenförmige Element mit den Kolben verfahrbar ist.

Vorteilhaft ist es, wenn außenseitig an einer zweiten Platte eine Abkratzvorrichtung angeordnet ist, wobei die Abkratzvorrichtung zumindest eine Schaufel umfasst. Die zweite Platte ist als Lochplatte ausgebildet, wobei die abgekratzten Partikel durch Aussparungen in der zweiten Platte schiebbar sind. Da dies jedoch nicht ohne Weiteres vollständig erfolgt, ist die Abkratzvorrichtung mit der Schaufel vorgesehen, welche die restlichen Partikel von der zweiten Platte und/oder einem Ende der Balken abkratzt. Die Schaufel kann hierzu beweglich gelagert sein, beispielsweise an einem Endlosband, und die zweite Platte mehrmals von den Partikeln befreien. Die Partikel werden in einer Strömungsrichtung des Luftstromes in bevorzugt eine Auffangeinrichtung für die abgeschiedenen Partikel abgeschoben bzw. abgekratzt.

Das weitere Ziel wird dadurch erreicht, dass bei einem Verfahren der eingangs genannten Art der Luftstrom über einen Abstand zwischen den als jeweils längliche Balken ausgebildeten Abscheidungselementen durch die Abscheidungslagen beschleunigt wird, wobei eine Strömungsrichtung durch die Abscheidungslagen, insbesondere durch Versatz derselben, verändert wird, und dass an den Balken abgeschieden Partikel mit einer Lackentfernungseinrichtung entfernt werden.

Ein damit erzielter Vorteil ist insbesondere darin zu sehen, dass der Luftstrom insbesondere durch eine erste Abscheidungslage bzw. über Abstände der dort angeordneten Balken beschleunigt wird und die Partikel, welche üblicherweise schwerer sind als die restlichen Anteile der Luft bzw. des Luftstromes, somit auf den Abscheidungslagen bzw. den Balken abgeschieden werden. Darüber hinaus werden die Balken durch die Lackentfernungseinrichtung effizient von den dort abgeschiedenen Partikeln gereinigt. Durch die Anordnung der Balken werden einerseits eine Geschwindigkeit und andererseits eine Strömungsrichtung des Luftstromes sprunghaft bzw. quasi übergangslos geändert, sodass schwere Partikel wie z. B. Lackpartikel dem restlichen Luftstrom nicht folgen bzw. deren Strömungsrichtung nicht schnell genug ändern können. Diese Partikel werden infolgedessen auf den Balken abgeschieden und somit aus dem Luftstrom gefiltert. Durch das erfindungsgemäße Verfahren werden die Partikel rein mechanisch aus einem Luftstrom abgeschieden, insbesondere ohne eine Verwendung von chemischen Zusätzen. Von Vorteil ist es darüber hinaus, wenn von der Lackentfernungseinrichtung zum Abscheiden der Partikel weder Wasser noch Trennmittel oder Steinmehl benötigt werden, sondern die Partikel rein mechanisch mit der Lackentfernungseinrichtung von den Balken entfernt werden. Der mit der Lackentfernungseinrichtung entfernte Lack bzw. die Partikel können in weiterer Folge pulverisiert und/oder für die Herstellung von minderwertigen Lacken wiederverwendet werden. Die Partikel werden getrennt vom restlichen Luftstrom aus der Vorrichtung abgeführt.

Es ist günstig, wenn der Luftstrom durch Abstände zwischen den Balken gesaugt wird, wobei die Partikel auf den Balken der Abscheidungslagen abgeschieden werden und in einem im Wesentlichen u-förmigen Querschnitt der Balken gesammelt werden. Es kann eine Saugvorrichtung hinter den Abscheidungslagen angeordnet werden, sodass der Luftstrom durch diese beschleunigt wird. Die Partikel, welche auf den Balken abgeschieden werden, werden in den u-förmigen Vertiefungen bzw. Mulder der Balken gesammelt. Hierbei ist es günstig, wenn die Balken waagrecht angeordnet werden und die u-förmige Vertiefung nach unten ausgebildet ist. Die Vorrichtung wird bevorzugt senkrecht von oben nach unten von einem Luftstrom durchströmt.

Besonders zweckmäßig ist es, wenn die Balken von den auf denselben gesammelten Partikeln durch entlang der Balken verfahrbare Kolben der Lackentfernungseinrichtung befreit werden. Die Balken werden von den Kolben von den dort abgeschiedenen Partikeln gereinigt, wofür die Kolben etwa formschlüssig entlang der u-förmigen Vertiefungen der Balken verschoben werden. Die Balken sind bevorzugt waagrecht zwischen zwei Platten angeordnet, welche als Lochplatten mit Aussparungen ausgebildet sind. Die Kolben werden zum Reinigen der Balken durch Aussparungen in einer ersten Lochplatte entlang der Balken verfahren und schieben die abgekratzten Partikel vor sich her. Durch Aussparungen in einer zweiten Platte werden die Partikel aus dieser entfernt und werden z. B. in einer Auffangeinrichtung gesammelt.

Um alle Kolben gleichmäßig zu bewegen, ist es günstig, wenn ein plattenförmiges Element mit den an diesem fixierten Kolben verfahren wird, um die Balken von dort abgelagerten Partikeln zu befreien. Die Kolben werden bevorzugt an das plattenförmige Element geschraubt, welches mit denselben bis zur ersten Platte verfahren wird.

Hierbei ist es weiter vorteilhaft, wenn zumindest eine Welle von einem Motor angetrieben wird, um das plattenförmige Element mit den Kolben zu bewegen. Der Motor wird bevorzugt am plattenförmigen Element befestigt, wobei dieser gegenüber den Kolben bzw. auf einer anderen Seite des plattenförmigen Elementes angeordnet wird. Die zumindest eine Welle wird bevorzugt mittelbar über z. B. ein Band oder eine Kette angetrieben. Insbesondere sind vier als Spindel ausgebildete Wellen vorgesehen, welche das plattenförmige Element mit den Platten verbinden und über welche das plattenförmige Element mit den Kolben verfahren wird.

Es ist von Vorteil, wenn ein Ende der Kolben und/oder eine zweite Platte mit einer Abkratzvorrichtung von Partikelresten befreit werden. Die Abkratzvorrichtung kann hierzu mit einer beweglichen, beispielsweise an einem Endlosband gelagerten Schaufel ausgebildet sein, von welcher die Kolben bzw. die zweite Platte entlang einer Strömungsrichtung des Luftstromes von Partikelresten befreit bzw. diese abkratzt werden. Die Aufgabe wird erfindungsgemäß weiter dadurch gelöst, dass bei einer weiteren Vorrichtung der eingangs genannten Art die Abscheidungselemente als in sich geschlossene und voneinander beabstandete Bänder ausgebildet sind, wobei die Bänder zweier Abscheidungslagen versetzt zueinander angeordnet sind, um den Luftstrom zwischen den Abscheidungslagen umzulenken, sodass jede Abscheidungslage zumindest eine Lagerung umfasst, welche von mehreren Bändern zumindest teilweise umschlossen ist.

Ein mit der Erfindung erzielter Vorteil ist insbesondere darin zu sehen, dass durch die Ausbildung der Abscheidungselemente bzw. Abscheidungslagen der Luftstrom so umlenkbar ist, dass ein Abscheiden der Partikel, welche üblicherweise schwerer sind als der restliche Luftstrom, auf den Bändern möglich ist. Dazu sind die Bänder von zwei benachbarten Abscheidungslagen versetzt zueinander angeordnet.

Erfindungsgemäß können beliebig viele Abscheidungslagen angeordnet sein, günstig ist es jedoch, wenn zumindest zwei vorgesehen sind, welche insbesondere versetzt zueinander angeordnet sind. Ferner können diese schichtartig hintereinander angeordnet sein. Die Bänder sind bevorzugt parallel zueinander und beabstandet voneinander angeordnet, wobei ein zwischen jeweils zwei Bändern ausgebildeter Abstand bevorzugt weniger breit sein kann als die Bänder selbst. Um ein möglichst gleichmäßiges Abscheiden von Partikeln auf allen Bändern zu ermöglichen, kann es günstig sein, wenn diese baugleich ausgebildet sind. Die Abstände zwischen den Bändern geben weiter eine Strömungsrichtung des Luftstromes vor und beeinflussen auch dessen Geschwindigkeit. Durch eine erfindungsgemäße Vorrichtung ist ein rein mechanisches Abscheiden von Partikeln aus einem Luftstrom möglich, insbesondere ohne eine Verwendung von chemischen Zusätzen.

Es ist vorgesehen, dass jede Abscheidungslage zumindest eine Lagerung für die Bänder umfasst, wobei die Bänder zumindest teilweise um die Lagerung herum angeordnet sind. Dabei sind die Bänder voneinander beabstandet auf der zumindest einen Lagerung angeordnet bzw. ist die Lagerung zumindest teilweise innerhalb der Bänder angeordnet. Die Bänder können beispielsweise zumindest teilweise elastisch ausgebildet sein und auf der Lagerung aufliegen.

Vorteilhaft ist es, wenn jede Abscheidungslage zwei Lagerungen umfasst, welche zylinderförmig ausgebildet sind. Die Lagerungen einer Abscheidungslage können dabei entlang einer Achse und voneinander beabstandet angeordnet sein, wobei die Bänder um diese herum aufgespannt sind. Ein Abstand zwischen zwei Lagerungen ist dabei so groß, dass der Luftstrom möglichst ungehindert von denselben durch Abstände zwischen den Bändern durchströmen kann. Bevorzugt sind die Lagerungen weiter so ausgebildet, dass die daran angeordneten Bänder zwei in etwa parallel zueinander ausgerichtete Seiten aufweisen, wobei auf einer davon Partikel abscheidbar sind und die andere dieser gegenüberliegt. Die zylinderförmigen Lagerungen sind ferner bevorzugt stabförmig ausgebildet und können an einem oberen und unteren Ende der Vorrichtung angeordnet sein. Dadurch werden die Bänder im kontinuierlichen Umlauf vertikal bzw. von unten nach oben geführt. Es kann allerdings auch vorgesehen sein, dass die Bänder horizontal bzw. von einer Seite der Vorrichtung zu einer anderen Seite geführt sind, wozu die Lagerungen jeweils auf einer Seite der Vorrichtung angeordnet sein können. Darüber hinaus ist auch jede andere Anordnung der Lagerungen bzw. der Abscheidungslagen mit den Bändern möglich, beispielsweise können die Bänder der Abscheidungslagen abwechselnd horizontal und vertikal verlaufen. Günstig kann es darüber hinaus sein, wenn die Lagerungen so ausgebildet sind, dass die Bänder entlang der Lagerungen einer Abscheidungslage verschiebbar sind. Dadurch ist ein Abstand zwischen Bändern einer Abscheidungslage variierbar. Die einzelnen Bänder können dabei bevorzugt jeweils baugleich ausgeführt sein. Es kann aber auch vorgesehen sein, dass beliebig viele Bänder unterschiedlich zueinander ausgebildet sind, beispielsweise eine jeweils andere Breite aufweisen.

Die Vorrichtung zum Abscheiden von Partikeln kann ferner eine Rahmenkonstruktion zur Aufnahme der Lagerungen umfassen. Die Lagerungen sind in einfacher Weise und lösbar an der Rahmenkonstruktion befestigbar, beispielsweise einhängbar. Dadurch ist eine Anzahl an Abscheidungslagen ohne großen Aufwand variierbar sowie ein Abstand zwischen den einzelnen Abscheidungslagen veränderbar.

Es kann mit Vorteil zumindest ein Antrieb vorgesehen sein, um die Lagerungen in Rotationsbewegung zu versetzen. Die Lagerungen führen dabei bevorzugt eine gleichmäßige Rotationsbewegung durch, wodurch sich auch die Bänder bewegen. Die Bänder sind somit als Förderbänder ausgebildet. Sind zwei Lagerungen pro Abscheidungslage vorgesehen, kann es vorteilhaft sein, dass eine Lagerung direkt vom Antrieb zur Durchführung von einer Rotationsbewegung angetrieben wird, welche durch Reibung auf die Bänder und von dort ebenfalls durch Reibung auf die zweite Lagerung übertragen wird. Dadurch ist jedes Band drehbar gelagert, wodurch jeweils ein gesamtes Band zur Abscheidung von Partikeln verwendbar ist. Der Antrieb kann dabei so ausgebildet sein, dass dieser die Lagerungen bzw. die Bänder konstant oder nur bedarfsweise in Bewegung versetzt. Günstig kann es weiter sein, wenn pro Abscheidungslage je ein Antrieb vorgesehen ist, wodurch jede Abscheidungslage bzw. die daran angeordneten Bänder unabhängig von jeder anderen Abscheidungslage in Bewegung versetzbar sind. Dies kann sich insbesondere bei einer Anordnung einer Vielzahl von Abscheidungslagen als günstig erweisen, da mit Fortschritt der Abscheidungslagen immer weniger Partikel im Luftstrom vorhanden sind, wodurch auch immer weniger Partikel abgeschieden werden.

Zweckmäßigerweise kann endseitig an einem Auslassbereich eine Saugvorrichtung vorgesehen sein, welche den Luftstrom in deren Richtung beschleunigt. Die Saugvorrichtung kann dabei beispielsweise als Ventilator ausgebildet sein und kann den Luftstrom erzeugen bzw. noch stärker beschleunigen. Der Auslassbereich ist bevorzugt nach den Abscheidungslagen bzw. an einem Ende der Vorrichtung angeordnet.

Weiter ist es von Vorteil, wenn ein Eingangsbereich vorgesehen ist, über welchen der Luftstrom auf eine erste Abscheidungslage trifft. Der Eingangsbereich ist insbesondere gegenüber dem Auslassbereich angeordnet und umfasst bevorzugt eine gesamte Breite der Abscheidungslagen. Der Luftstrom trifft dabei über den Eingangsbereich auf eine erste Abscheidungslage, welche mehrere voneinander beabstandete Bänder oder Balken umfasst. Es kann vorgesehen sein, dass der Luftstrom im Eingangsbereich z. B. eine Geschwindigkeit von 8 m/s aufweist und durch die Abstände zwischen den Bändern oder Balken auf z. B. 70 m/s, bevorzugt auf eine zumindest doppelt so große Geschwindigkeit, insbesondere auf eine 5-mal so große Geschwindigkeit, beschleunigt wird. Eine solche Beschleunigung des Luftstroms ist dadurch möglich, dass ein Strömungsbereich der Luft abrupt bzw. quasi übergangslos verjüngt wird. Durch die Verjüngung werden bereits auf die erste Abscheidungslage Partikel abgeschieden, da diese üblicherweise schwerer und somit träger als die restlichen Luftanteile sind.

Vorteilhaft ist weiter, wenn eine Einrichtung zum Entfernen der Partikel von den Bändern vorgesehen ist. Diese Einrichtung kann beispielsweise bodenseitig an der Vorrichtung angeordnet sein. Von Vorteil ist es dazu, wenn zum Abscheiden der Partikel weder Wasser noch Trennmittel oder Steinmehl benötigt werden. Der mit der Einrichtung zum Entfernen entfernte Lack bzw. die Partikel sind in weiterer Folge pulverisierbar oder für die Herstellung von minderwertigen Lacken wiederverwendbar. Mit dieser Einrichtung ist ein Entfernen der Partikel im laufenden Betrieb möglich.

Eine Verwendung einer erfindungsgemäßen Vorrichtung erfolgt mit Vorteil beim Abscheiden von Lackpartikeln von einem bei einem Fahrzeuglackiervorgang abgeführten Luftstrom.

Das verfahrensmäßige Ziel wird weiter erreicht, wenn bei einem weiteren Verfahren der eingangs genannten Art der Luftstrom über einen Abstand zwischen den als jeweils in sich geschlossene Bänder ausgebildeten Abscheidungselementen durch die Abscheidungslagen beschleunigt wird, wobei eine Strömungsrichtung durch die Abscheidungslagen, insbesondere durch Versatz derselben, verändert wird.

Von Vorteil ist es dabei, wenn der Luftstrom insbesondere durch eine erste Abscheidungslage bzw. über Abstände der dort angeordneten Bänder beschleunigt wird und die Partikel, welche üblicherweise schwerer sind als die restlichen Anteile der Luft bzw. des Luftstromes, somit auf den Abscheidungslagen bzw. den Bändern abgeschieden werden. Durch die Anordnung der Bänder werden einerseits eine Geschwindigkeit und andererseits eine Strömungsrichtung des Luftstromes sprunghaft bzw. quasi übergangslos geändert, sodass schwere Partikel wie z. B. Lackpartikel dem restlichen Luftstrom nicht folgen bzw. deren Strömungsrichtung nicht schnell genug ändern können. Diese Partikel werden infolgedessen auf den Bändern abgeschieden und somit aus dem Luftstrom gefiltert.

Dazu kann bevorzugt vorgesehen sein, dass der Luftstrom von einer endseitig angeordneten Saugvorrichtung angesaugt wird. Die Saugvorrichtung kann beispielsweise als Ventilator ausgebildet sein und der Luftstrom kann durch Abstände zwischen den Bändern oder Balken von dieser angesaugt bzw. erzeugt werden.

Zweckmäßig ist es, wenn die Bänder von einem Antrieb, insbesondere indirekt, in Drehung versetzt werden. Dazu können bevorzugt Lagerungen vorgesehen sein, welche von den Bändern zumindest teilweise umschlossen werden. Bevorzugt können die Lagerungen vom Antrieb zur Durchführung einer Rotationsbewegung angetrieben werden, wodurch auch die Bänder durch die Reibung indirekt in Bewegung versetzt werden und sich wie Förderbänder bewegen. Die Bänder einer Abscheidungslage können dabei insbesondere auf zwei Lagerungen gelagert werden, welche mit Abstand zueinander angeordnet sind. Die Lagerungen können zylinderförmig bzw. stabförmig ausgebildet sein und beispielsweise auf eine Rahmenkonstruktion der Vorrichtung angebracht bzw. eingehängt werden.

Es kann bevorzugt vorgesehen sein, dass der Luftstrom über einen Eingangsbereich auf eine erste Abscheidungslage geführt wird. Der Eingangsbereich kann dabei so groß ausgebildet sein, dass dieser über eine gesamte Breite der Abscheidungslagen reicht. Eine Geschwindigkeit des Luftstromes wird beim Übergang vom Eingangsbereich auf die erste Abscheidungslage bzw. auf Abstände zwischen den darauf gelagerten Bändern oder Balken beschleunigt, beispielsweise von 8 m/s auf 70 m/s.

Bevorzugt kann weiter vorgesehen sein, dass Partikel mit einer Einrichtung zum Entfernen von den Bändern entfernt werden. Es kann dadurch ein Bereich der Bänder, an welchen gerade keine Partikel abgeschieden werden, von dort bereits abgeschiedenen Partikeln gereinigt werden. Damit ist eine Reinigung der Abscheidungselemente im laufenden Betrieb möglich.

Mit Vorteil kann darüber hinaus vorgesehen sein, dass der Luftstrom durch Abstände zwischen den Bändern gesaugt wird, wobei die Partikel auf den Bändern der Abscheidungslagen abgeschieden werden. Bevorzugt werden die Bänder zweier Abscheidungslagen dazu jeweils versetzt zueinander angeordnet, sodass eine Strömungsrichtung des Luftstromes nach jeder Abscheidungslage umgeändert wird. Dadurch werden auf jedem Band Partikel abgeschieden und am Ende der Abscheidungslagen ist der Luftstrom zumindest annähernd frei von Partikeln. Sollten nach der Durchströmung aller Abscheidungslagen noch Verunreinigungen bzw. Partikel im Luftstrom vorhanden sein, können diese beispielsweise mit einem zusätzlichen Filterelement gefiltert werden.

Weitere Merkmale, Vorteile und Wirkungen ergeben sich aus den nachfolgend dargestellten Ausführungsbeispielen. In den Zeichnungen, aufweiche dabei Bezug genommen wird, zeigen:
Fig. 1 eine erfindungsgemäße Vorrichtung;
Fig. 2 eine weitere erfindungsgemäße Vorrichtung;
Fig. 3 eine weitere Ansicht einer erfindungsgemäßen Vorrichtung gemäß Fig. 2;
Fig. 4 eine schematische Ansicht einer Vorrichtung zur Erläuterung eines erfindungsgemäßen Verfahrens;
Fig. 5a eine weitere erfindungsgemäße Vorrichtung;
Fig. 5b eine weitere Ansicht einer erfindungsgemäßen Vorrichtung gemäß Fig. 5a;
Fig. 6 einen Schnitt durch eine erfindungsgemäße Vorrichtung;
Fig. 7 eine weitere erfindungsgemäße Vorrichtung;
Fig. 8a eine Lackentfernungseinrichtung;
Fig. 8b eine weitere Ansicht einer Lackentfernungseinrichtung gemäß Fi. 8a;
Fig. 9a eine weitere erfindungsgemäße Vorrichtung;
Fig. 9b einen Ausschnitt aus einer erfindungsgemäßen Vorrichtung gemäß Fig. 9a;
Fig. 10 eine weitere erfindungsgemäße Vorrichtung.

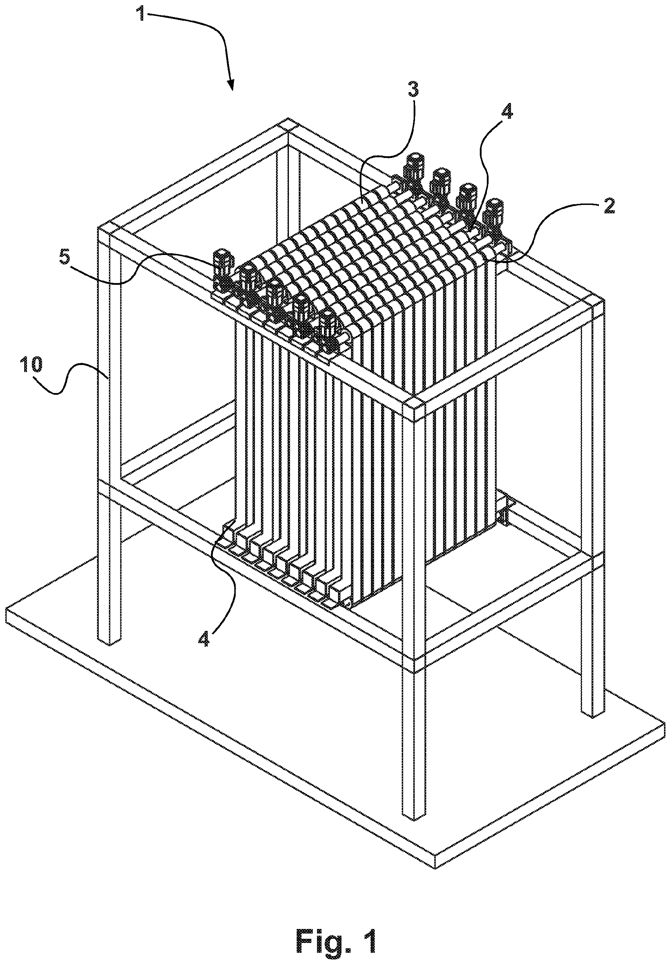

Fig. 1 zeigt eine erfindungsgemäße Vorrichtung 1 zum Abscheiden von Partikeln aus einem Luftstrom, umfassend mehrere Abscheidungslagen 2 mit mehreren Abscheidungselementen. Gemäß Fig. 1 sind die Abscheidungselemente dabei als in sich geschlossene Bänder 3 ausgebildet, welche auf Lagerungen 4 bzw. diese umschließend gelagert sind. Es ist günstig, wenn pro Abscheidungselement zwei Lagerungen 4 vorgesehen sind, welche von mehreren Bändern 3 zumindest teilweise umschlossen sind. Die Bänder 3 sind beabstandet voneinander angeordnet, um durch Abstände einen Luftstrom umzulenken. Dabei kann vorgesehen sein, dass ein Abstand zwischen den Bändern 3 kleiner ist als dieselben breit sind. Weiter können die Bänder 3 mit einer gewissen Elastizität ausgebildet sein, sodass diese auf den Lagerungen 4 aufliegen. Die Lagerungen 4 können bevorzugt zylindrisch bzw. stabförmig ausgebildet sein und von einem oder mehreren Antrieben 5 zur Durchführung einer Drehbewegung um deren Längsachse angetrieben sein. Günstig ist es, wenn pro Abscheidungslage 2 ein Antrieb 5 vorhanden ist, sodass die Lagerungen 4 bzw. Bänder 3 einer Abscheidungslage 2 unabhängig von den Lagerungen 4 bzw. den Bändern 3 aller anderen Abscheidungslagen 2 in Bewegung versetzbar sind. Ferner ist auch eine Geschwindigkeit der Drehbewegung der Lagerungen 4 je Abscheidungslage 2 individuell einstellbar. Jeder Antrieb 5 kann Mittel zum Übertragen der Bewegungen auf die zumindest eine Lagerung 4 umfassen.

Wie in Fig. 1 ersichtlich, können die Lagerungen 4 auf einer Rahmenkonstruktion 10 gelagert bzw. eingehängt sein. Die Vorrichtung 1 kann beliebig viele Abscheidungslagen 2 umfassen, um eine Gesamtheit der Partikel aus dem Luftstrom abzuscheiden. Eine Anzahl an Abscheidungslagen 2 kann darüber hinaus auch variiert werden, wenn diese in einfacher Weise in die Rahmenkonstruktion 10 einhängbar bzw. lösbar daran befestigbar sind. Weiter ist auch eine Anzahl an Bändern 3 pro Abscheidungslage 2 nicht limitierend vorgegeben. Es ist jedoch günstig, wenn zumindest zwei Bänder 3 vorgesehen sind, um einen Strömungsbereich des Luftstromes zwischen denselben zu verkleinern. Die Abscheidungslagen 2 bzw. die Bänder 3 derselben sind insbesondere versetzt zueinander angeordnet, sodass der Luftstrom bei einem Übergang von einer Abscheidungslage 2 zu einer nächsten immer dessen Richtung und Geschwindigkeit ändert.

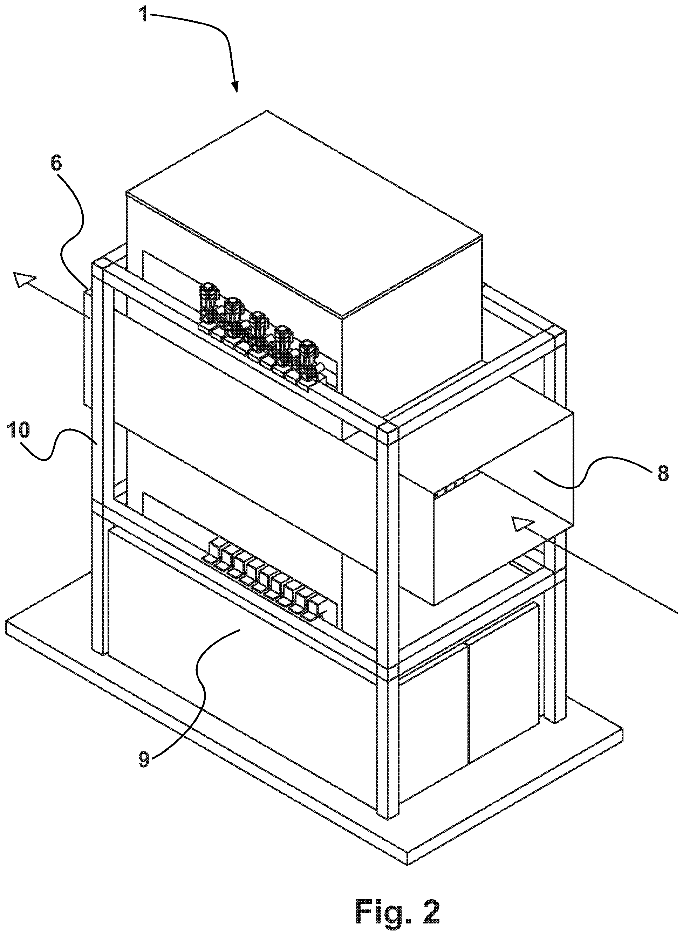

In Fig. 2 ist eine weitere erfindungsgemäße Vorrichtung 1 gezeigt, wobei die Abscheidungslagen 2 von einer Abdeckung umgeben sind, sodass eine Strömungsrichtung des Luftstromes vorgegeben ist. Die Strömungsrichtung ist in Fig. 2 durch Pfeile dargestellt. Der Luftstrom trifft über einen Eingangsbereich 8 auf eine erste Abscheidungslage 2 und verlässt die Vorrichtung über einen Auslassbereich 6. Im Auslassbereich 6 kann zum Ansaugen des Luftstromes eine in Fig. 2 nicht ersichtliche Saugvorrichtung 7 vorgesehen sein. Die Saugvorrichtung 7 kann beispielsweise als Ventilator ausgebildet sein und den Luftstrom in dessen Richtung beschleunigen. An einem unteren Ende der Vorrichtung 1 bzw. unter den Bändern 3 kann eine Einrichtung 9 zum Entfernen der Partikel angeordnet sein. Mit dieser sind die Partikel von den Bändern 3 beispielsweise abkratzbar, wozu eine Oberfläche der Bänder 3 entsprechend ausgebildet sein kann. Durch die Einrichtung 9 zum Entfernen in Kombination mit der drehbaren Lagerung 4 der Bänder 3 kann die Vorrichtung 1 dauerhaft in Betrieb sein, ohne dass diese wegen aufwendiger Wartungsarbeiten über einen längeren Zeitraum nicht zum Abscheiden von Partikeln nutzbar ist.

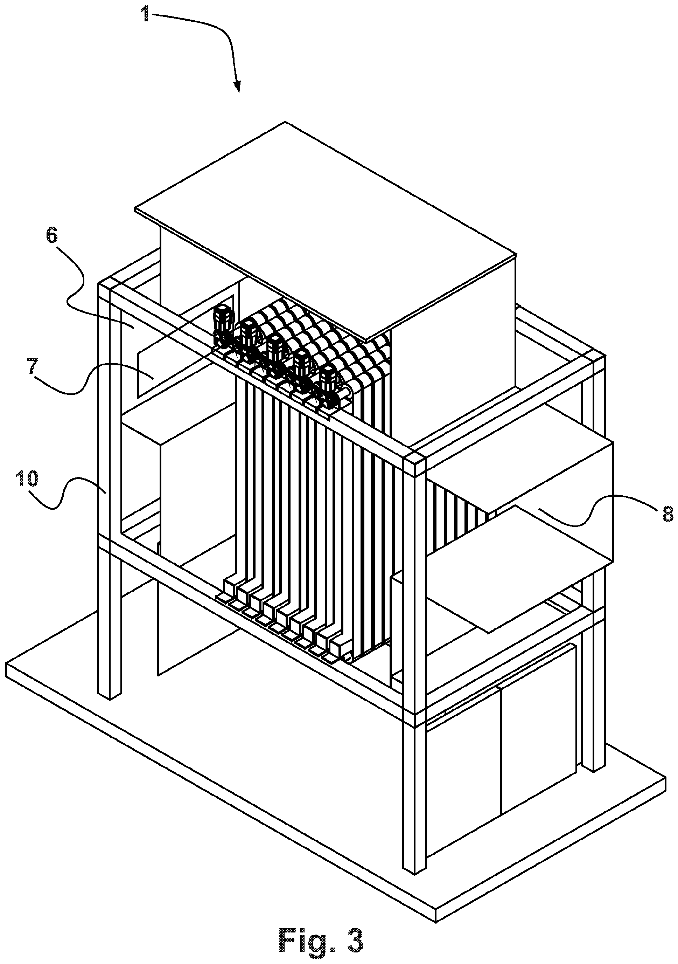

Eine weitere Ansicht der Vorrichtung 1 zum Abscheiden von Partikeln gemäß Fig. 2 ist in Fig. 3 gezeigt, wobei eine Innenansicht dieser freigelegt ist. Dadurch ist die Saugvorrichtung 7 im Auslassbereich 6 dargestellt.

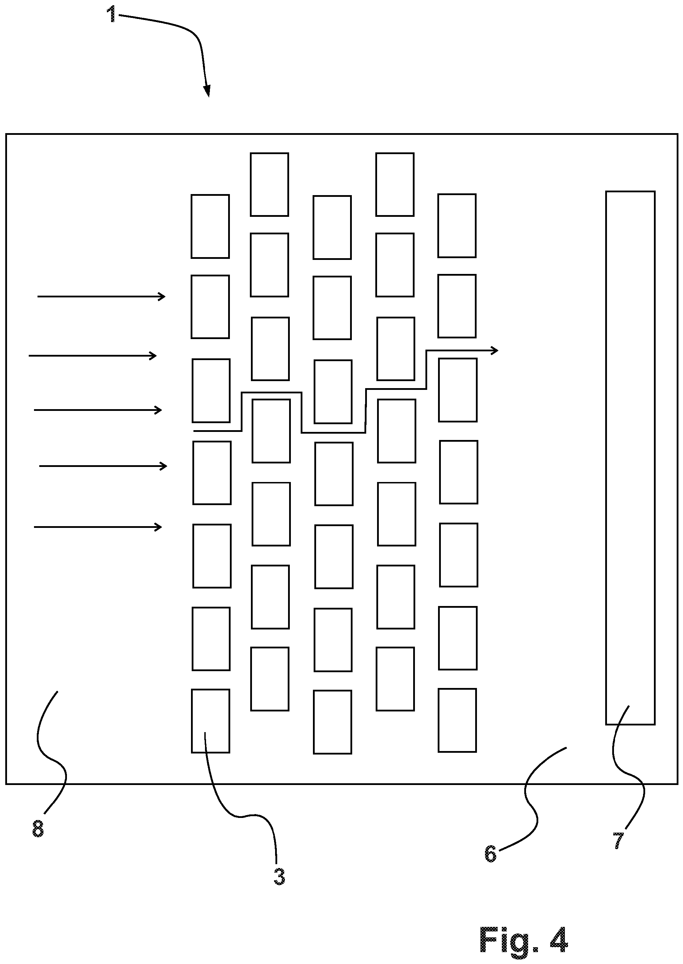

Bei einem erfindungsgemäßen Verfahren zum Abscheiden von Partikeln aus einem Luftstrom wird wie in Fig. 4 gezeigt dieser Luftstrom über den Eingangsbereich 8 auf eine erste von mehreren Abscheidungslagen 2 geführt, wobei jede Abscheidungslage 2 aus nebeneinander und beabstandet voneinander angeordneten Bändern 3 gebildet ist.

Fig. 4 zeigt eine schematische Draufsicht auf eine erfindungsgemäße Vorrichtung 1. Der Luftstrom kann dabei beispielsweise mit einer Geschwindigkeit von etwa 8 m/s auf die erste Abscheidungslage 2 geführt werden. Dort ist ein Bereich für den Luftstrom verkleinert, da dieser nur mehr durch Abstände zwischen den Bändern 3 strömen kann. Durch diese Verjüngung wird der Luftstrom auf beispielsweise 70 m/s beschleunigt. Die Partikel im Luftstrom sind üblicherweise schwerer und deshalb träger als die restlichen Luftanteile, weshalb diese der Beschleunigung des Luftstromes nicht folgen können und auf die Bänder 3 prallen, wo diese haften bleiben. Durch die beabstandete Anordnung der Abscheidungslagen 2 bzw. der Bänder 3 wird der Luftstrom bei dessen Durchgang durch dieselben immer wieder über die Abstände umgelenkt. Die schweren Partikel im beschleunigten Luftstrom sind zu träge, um diese unvermittelten Richtungsänderungen mitzumachen und bleiben somit bei jeder Abscheidungslage 2 auf den Bändern 3 haften. Es kann vorgesehen sein, dass der Luftstrom von der Saugvorrichtung 7 im Auslassbereich 6 angesaugt wird.

Werden die drehbar gelagerten Bänder 3 über zumindest einen Antrieb 5 in Drehung versetzt, so werden die auf diesen haftenden Partikel an ein unteres Ende der Vorrichtung 1 befördert, wo eine Einrichtung 9 zum Entfernen der Partikel angeordnet ist. Mithilfe dieser Einrichtung 9 werden die Partikel von den Bändern 3 gekratzt bzw. gerindet, wodurch die Bänder 3 dauerhaft verwendet werden können.

Eine erfindungsgemäße Vorrichtung 1 wird insbesondere bei bzw. nach einem Fahrzeuglackiervorgang verwendet, wobei ein mit Lack- bzw. Farbpartikel verunreinigter Luftstrom nach dem Lackiervorgang abgeführt bzw. der Vorrichtung zugeführt wird. Die an den Bändern 3 der Vorrichtung 1 abgeschiedenen Lackpartikel werden von diesen entfernt und können anschließend beispielsweise zur Herstellung von minderwertigen Lacken wiederverwendet werden. Dadurch wird der "Overspray", welcher bei einem Lackiervorgang von Fahrzeugen entsteht, in einfacher Weise und effizient aus dem Luftstrom bzw. der Luft gefiltert, insbesondere frei von chemischen Zusätzen.

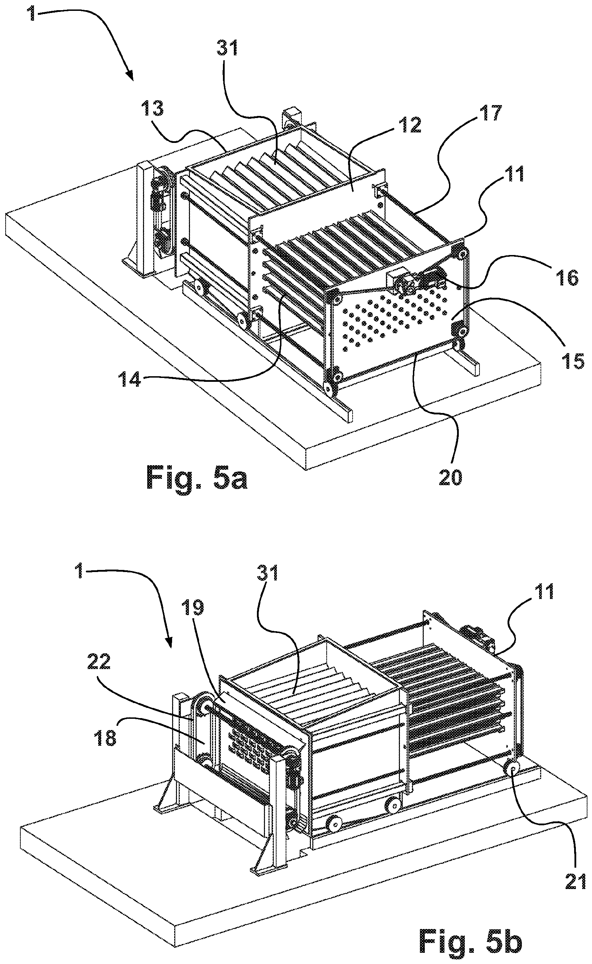

Fig. 5a und 5b zeigen zwei Ansichten einer weiteren erfindungsgemäßen Vorrichtung 1 zum Abscheiden von Partikeln aus einem Luftstrom. Diese umfasst mehrere in Fig. 5a und 5b nicht ersichtliche Abscheidungslagen 2 mit jeweils mehreren als längliche Balken 31 ausgebildeten Abscheidungselementen. Die Balken 31 sind beabstandet voneinander und versetzt zueinander angeordnet, sodass ein Luftstrom zwischen jeweils zwei Abscheidungslagen 2 umgelenkt wird. Insbesondere Lackpartikel sind üblicherweise schwerer als der restliche Luftstrom, weshalb diese eine solche Umlenkung zwischen den Balken 31 nicht schaffen und an den Balken 31 haften bleiben. Die Balken 31 weisen einen u-förmigen Querschnitt auf, wobei sich die abgeschiedenen Partikel in einer Mulde der u-förmigen Balken 31 sammeln. Die Balken 31 sind zwischen zwei Platten 12, 13 eingeklemmt bzw. mit deren Enden an diesen befestigt. In Fig. 5a und 5b strömt ein Gemisch aus Luft und Partikel vertikal von oben nach unten durch die Vorrichtung.

Darüber hinaus umfasst diese Vorrichtung 1 eine Lackentfernungsvorrichtung 11, welche die an den Balken 31 abgeschiedenen Partikel aus deren u-förmigen Mulden entfernt. Die Lackentfernungsvorrichtung 11 umfasst Kolben 14 und ein plattenförmiges Element 15, an welchem die Kolben 14 geschraubt sind. Das plattenförmige Element 15 ist in Richtung der ersten Platte 12 und die Kolben 14 folglich entlang der Balken 31 verfahrbar. Die Kolben 14 passen etwa formschlüssig in die u-förmigen Balken 31, sodass diese in dieselben eingefahren werden können und dadurch die darin abgelagerten Partikel entfernbar sind. Die Partikel sind somit mit den Kolben 14 aus den jeweiligen Balken 31 ausdrückbar bzw. hinausschiebbar.

Zum Antreiben des plattenförmigen Elementes 15 mit den Kolben 14 sind ein Motor 16 und zumindest eine Welle 17 vorgesehen, wobei der Motor 16 die Welle 17 antreibt, um das plattenförmige Element 15 mit den Kolben 14 zu bewegen. Der Motor 16 ist am plattenförmigen Element 15 befestigt, wobei dieser gegenüber den Kolben 14 bzw. auf einer anderen Seite des plattenförmigen Elementes 15 angeordnet ist. In Fig. 5a und 5b sind vier Wellen 17 vorgesehen, welche mittelbar über ein Band 20 angetrieben sind.

Insbesondere sind die vier Wellen 17 als Spindel ausgebildet, wobei diese das plattenförmige Element 15 mit den Platten 12, 13 verbinden. Weiter umfasst die Lackentfernungseinrichtung 11 Rollelemente 21 wie Rollen, sodass ein Gleitwiderstand reduziert wird. Ferner sind auch an der Vorrichtung 1 selbst Gleitelemente 21 angeordnet, um diese beispielsweise in einem Wartungsfall einfach tauschen zu können.

Wie in Fig. 5b gezeigt, ist außenseitig an der zweiten Platte 13 eine Abkratzvorrichtung 18 mit einer Schaufel 19 angeordnet. Die zweite Platte 13 ist als Lochplatte ausgebildet, wobei die abgekratzten Partikel durch Aussparungen in der zweiten Platte 13 schiebbar sind. Da dies jedoch nicht ohne Weiteres vollständig erfolgt, ist die Abkratzvorrichtung 18 mit der Schaufel 19 vorgesehen, welche die restlichen Partikel von der zweiten Platte 13 und/oder einem Ende der Balken 31 abkratzt. Die Schaufel 19 ist hierzu beweglich an einem Endlosband 22 gelagert, sodass diese die zweite Platte 13 bzw. die Kolben 14 mehrmals aufeinanderfolgend von den Partikeln befreien kann.

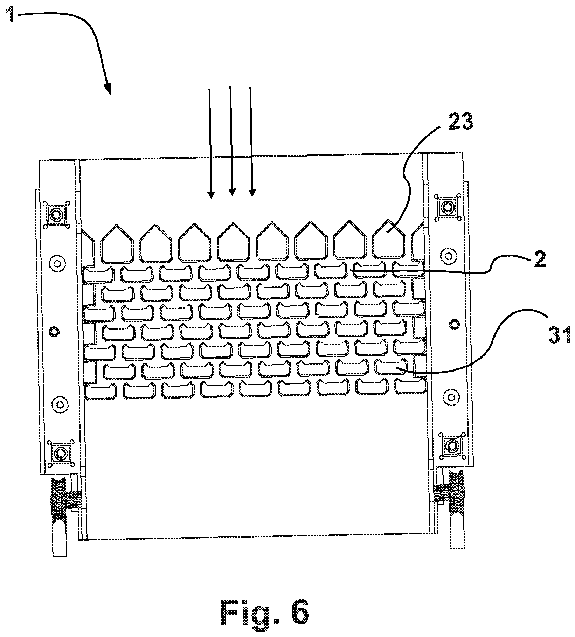

In Fig. 6 ist ein Schnitt durch eine Vorrichtung 1 gezeigt. Ein von Partikeln zu reinigender Luftstrom durchströmt diese in vertikaler Richtung von oben nach unten. Dies ist in Fig. 6 mit Pfeilen angedeutet. Es sind mehrere Abscheidungsalgen 2 mit jeweils mehreren Balken 31 vorgesehen, wobei die Balken 31 von zwei benachbarten Abscheidungslagen 2 jeweils versetzt zueinander angeordnet sind. Oberhalb bzw. vor einer ersten Abscheidungslage 2 sind Profile 23 vorgesehen, über welche ein auf die Vorrichtung 1 treffender Luftstrom auf die erste Abscheidungslage 2 gelenkt wird. Die Profile 23 sind so angeordnet, dass der Luftstrom die Balken 31 der ersten Abscheidungslage 2 etwa mittig trifft. In Fig. 6 ist weiter ein etwa u-förmiger Querschnitt der Balken 31 gezeigt, wodurch abgeschiedenen Partikel auf bzw. in den Balken 31 gesammelt werden können.

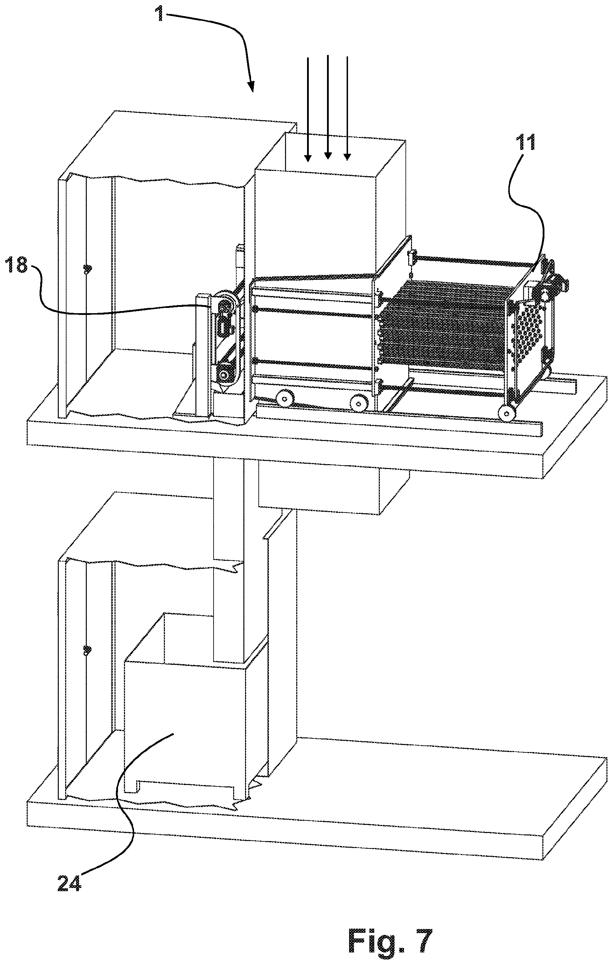

Fig. 7 zeigt eine weitere Vorrichtung 1 zum Abscheiden von Partikeln aus einem Luftstrom. Diese umfasst zusätzliche zu einer Vorrichtung 1 gemäß Fig. 5a und 5b eine Auffangeinrichtung 24 zum Sammeln der abgeschiedenen und abgekratzten Partikel. Diese ist unterhalb der Abkratzvorrichtung 18 angeordnet. Der Luftstrom wird vertikal durch die Vorrichtung 1 geführt und die Balken 31 sind demzufolge etwa horizontal angeordnet. Der von Partikel gereinigte Luftstrom wird ebenfalls unterhalb der Vorrichtung 1 abgeführt, allerdings getrennt von den Partikeln.

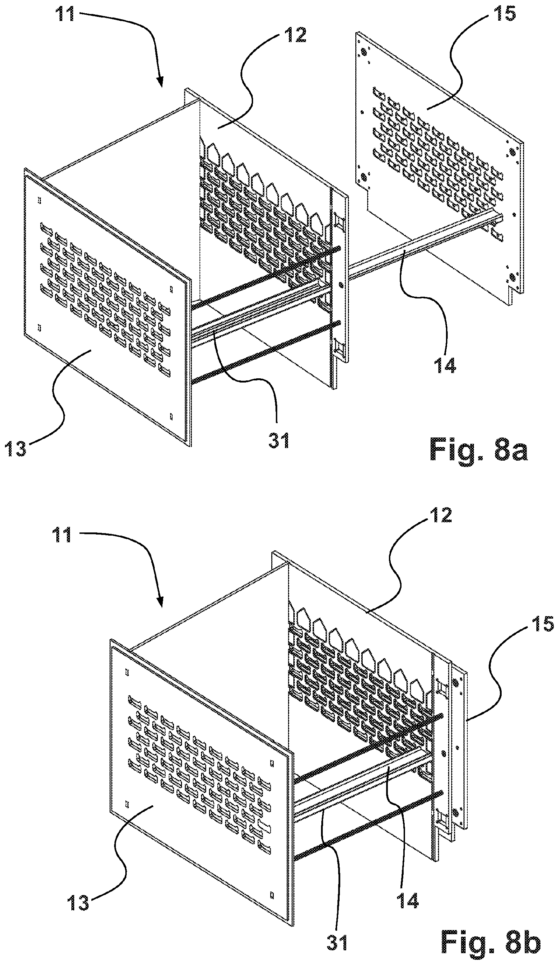

In Fig. 8a und 8b sind zwei unterschiedliche Zustände einer Lackentfernungseinrichtung 11 gezeigt. Zum leichteren Verständnis ist jeweils nur ein Balken 31 und ein Kolben 14 dargestellt. Fig. 8a zeigt die Lackentfernungseinrichtung 11 in einem vollständig ausgefahrenen Zustand. Der Kolben 14 ist am plattenförmigen Element 15 befestigt, welches in Richtung der ersten Platte 12 verschiebbar gelagert ist. Fig. 8b zeigt die Lackentfernungseinrichtung 11 in einem eingefahrenen Zustand, in welchem das plattenförmige Element 15 an der ersten Platte 12 ansteht. Der Kolben 14 liegt formschlüssig auf dem Balken 31 bzw. in dessen u-förmiger Aussparung. Während des Heranfahrens des plattenförmigen Elementes 15 drückt der Kolben 14 dort abgelagerte Partikel aus dem Balken 31, wodurch dieser gesäubert wird. In der ersten Platte 12 ist eine Aussparung pro Kolben 14 vorgesehen, durch welche der Kolben 14 hindurchtritt. Die Partikel werden bis zur zweiten Platte 13 geschoben bzw. über dort angeordnete Aussparungen durch die zweite Platte 13 hindurch. Bei einem Zurückfahren des Kolbens 14 können sich noch Partikelreste an diesem befinden, welche jedoch beim Durchtritt des Kolbens 14 durch die Aussparung in der ersten Platte 12 an diesen abgestreift werden und zurück in den Balken 31 fallen.

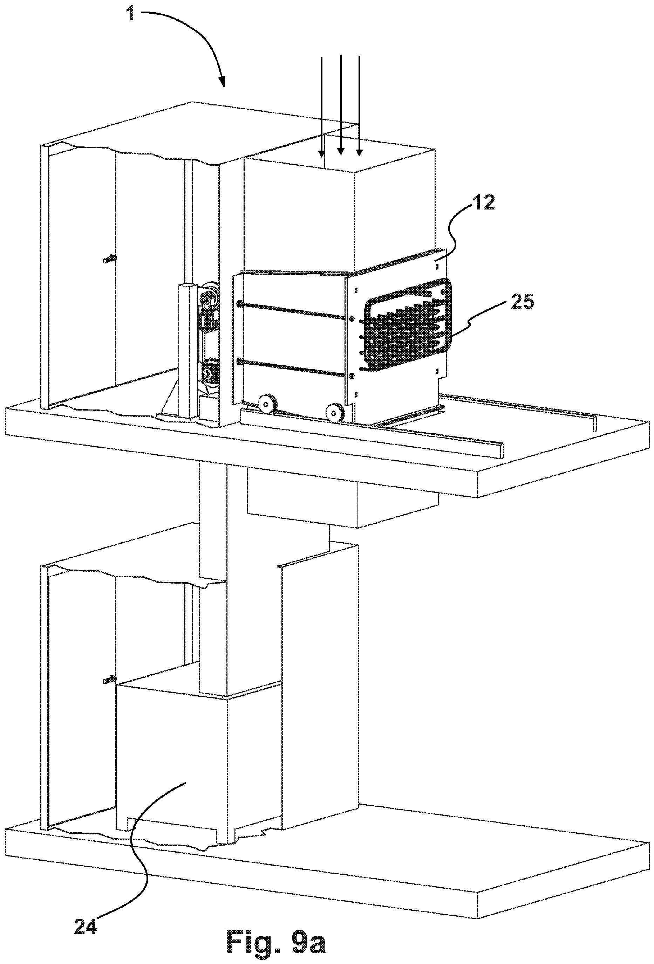

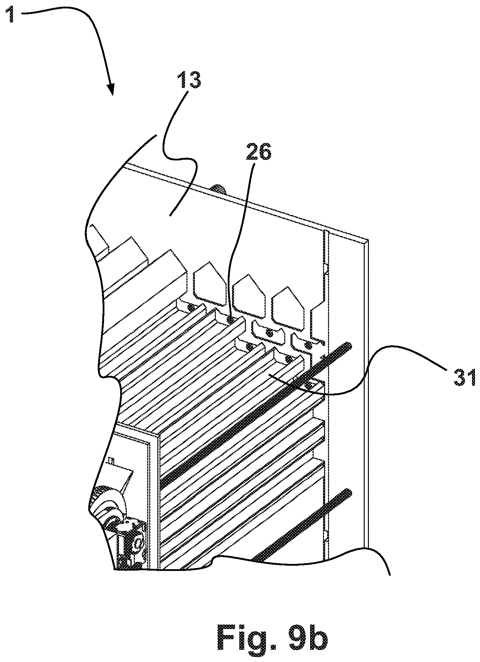

Fig. 9a und 9b zeigen eine weitere Ausführungsform einer erfindungsgemäßen Vorrichtung 1, wobei in Fig. 9b ein Ausschnitt aus Fig. 9a gezeigt ist. Diese entspricht im Wesentlichen der Vorrichtung 1 gemäß Fig. 7. Die Lackentfernungseinrichtung 11 ist hier jedoch als Flüssigkeitsverteiler 25 ausgebildet.

Dieser ist insbesondere außenseitig an der ersten Platte 12 angeordnet und ist so ausgebildet, dass dieser eine Flüssigkeit auf bzw. in die Balken 31 verteilt. Bevorzugt erfolgt dies unter erhöhtem Druck, sodass die Flüssigkeit die Balken 31 von den Partikeln befreit und diese mit der Flüssigkeit in Richtung der zweiten Platte 13 strömen, wo das Gemisch aus Flüssigkeit und Partikelresten durch die Aussparungen in der zweiten Platte 13 aus derselben austritt. Das Gemisch aus Flüssigkeit und Partikelresten läuft dann in die Auffangeinrichtung 24, welche unterhalb der Abkratzvorrichtung 18 angeordnet ist. Die Auffangeinrichtung 24 umfasst weiter eine Trennvorrichtung zum Trennen der Flüssigkeit von den Partikeln. Dadurch sind sowohl die Flüssigkeit als auch die Partikel wiederverwendbar.

In Fig. 9b ist ein Ausschnitt aus Fig. 9a gezeigt. Es ist ersichtlich, dass für jeden Balken 31 ein Anschluss 26 des Flüssigkeitsverteilers 25 vorgesehen ist, sodass jeder Balken 31 mit Flüssigkeit durchgespült bzw. gereinigt werden kann. Es kann vorgesehen sein, dass die Lackentfernungseinrichtung 11 als Flüssigkeitsverteiler 25 ausgebildet ist, durch welchem die Balken 31 permanent mit Flüssigkeit durchspülbar sind, auch während eines Betriebes der Vorrichtung 1. Alternativ kann jedoch auch eine Lackentfernungseinrichtung 11 gemäß der in Fig. 5a und 5b gezeigten Vorrichtung 1 vorgesehen sein, welche von der restlichen Vorrichtung 1 abtrennbar ist. Dadurch sind beide Varianten der Lackentfernungseinrichtung 11 abwechselnd zum Reinigen der Balken verwendbar.

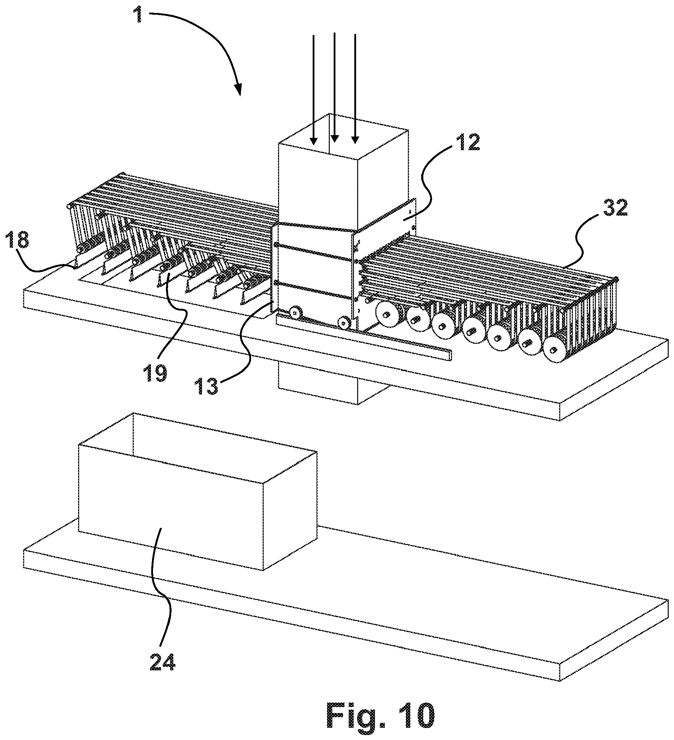

Fig. 10 zeigt eine weitere Vorrichtung 1 zum Abscheiden von Partikeln aus einem Luftstrom. Diese umfasst mehrere Abscheidungslagen 2 mit jeweils mehreren Bandelementen 32, auf welchen Partikel abscheidbar sind. Die Bandelemente 32 sind durch Aussparungen in den zwei Platten 12, 13 durchgeführt, wobei ein Luftstrom vertikal geführt ist und von oben auf die Bandelemente 32 trifft, welche wiederum versetzt zueinander angeordnet sind. Darüber hinaus ist eine Abkratzvorrichtung 18 vorgesehen, welche mehrere Schaufeln 19 zum Abkratzen der an den Bandelementen 32 abgeschiedenen Partikel umfasst. Unterhalb der Abkratzvorrichtung 18 ist eine Auffangeinrichtung 24 zum Sammeln der abgekratzten Partikel angeordnet.

## Patentansprüche

1. Vorrichtung (1) zum Abscheiden von Partikeln, insbesondere Lackpartikeln, aus einem Luftstrom, umfassend mehrere Abscheidungslagen (2) mit jeweils mehreren Abscheidungselementen, wobei die Abscheidungselemente als längliche Balken (31) ausgebildet und voneinander beabstandet angeordnet sind, wobei die Balken (31) zweier Abscheidungslagen (2) versetzt zueinander angeordnet sind, um den Luftstrom zwischen den Abscheidungslagen (2) umzulenken, **dadurch gekennzeichnet, dass** eine Lackentfernungseinrichtung (11) zum Reinigen der Balken (31) vorgesehen ist, welche entlang der Balken (31) verfahrbare Kolben (14) umfasst und die Anzahl der Kolben (14) der Anzahl der Balken (31) entspricht, wobei die Balken (31) einen im Wesentlichen u-förmigen Querschnitt aufweisen, um abgeschiedene Partikel darin zu sammeln.

2. Vorrichtung (1) nach Anspruch 1, **dadurch gekennzeichnet, dass** die Balken (31) zwischen zwei Platten (12, 13) eingefasst sind.

3. Vorrichtung (1) nach Anspruch 2, **dadurch gekennzeichnet, dass** die Kolben (14) mit einem Ende an einem plattenförmigen Element (15) fixiert sind, wobei das plattenförmige Element (15) mit den Kolben (14) in Richtung einer ersten Platte (12) verfahrbar ist.

4. Vorrichtung (1) nach Anspruch 2 oder 3, **dadurch gekennzeichnet, dass** ein Motor (16) und zumindest eine Welle (17) vorgesehen sind, wobei der Motor (16) die Welle (17) antreibt, um das plattenförmige Element (15) mit den Kolben (14) zu bewegen.

5. Vorrichtung (1) nach einem der Ansprüche 2 bis 4, **dadurch gekennzeichnet, dass** außenseitig an einer zweiten Platte (13) eine Abkratzvorrichtung (18) angeordnet ist, wobei die Abkratzvorrichtung (18) zumindest eine Schaufel (19) umfasst.

6. Verfahren zum Abscheiden von Partikeln, insbesondere Lackpartikeln, aus einem Luftstrom, wobei die Partikel auf jeweils mehreren Abscheidungselementen von mehreren Abscheidungslagen (2) abgeschieden werden, wobei der Luftstrom über einen Abstand zwischen den als jeweils längliche Balken (31) ausgebildeten Abscheidungselementen durch die Abscheidungslagen (2) beschleunigt wird, wobei eine Strömungsrichtung durch die Abscheidungslagen (2), insbesondere durch Versatz derselben, verändert wird, **dadurch gekennzeichnet, dass** an den Balken (31) abgeschieden Partikel mit einer Lackentfernungseinrichtung (11) entfernt werden, wobei der Luftstrom durch Abstände zwischen den Balken (31) gesaugt wird, wobei die Partikel auf den Balken (31) der Abscheidungslagen (2) abgeschieden werden und in einem im Wesentlichen u-förmigen Querschnitt der Balken (31) gesammelt werden, wobei die Balken (31) von den auf denselben gesammelten Partikeln durch entlang der Balken (31) verfahrbare Kolben (14) der Lackentfernungseinrichtung (11) befreit werden.

7. Verfahren nach Anspruch 6, **dadurch gekennzeichnet, dass** ein plattenförmiges Element (15) mit den an diesem fixierten Kolben (14) verfahren wird, um die Balken (31) von dort abgelagerten Partikeln zu befreien.

8. Verfahren nach Anspruch 7, **dadurch gekennzeichnet, dass** zumindest eine Welle (17) von einem Motor (16) angetrieben wird, um das plattenförmige Element (15) mit den Kolben (14) zu bewegen.

9. Verfahren nach einem der Ansprüche 6 bis 8, **dadurch gekennzeichnet, dass** ein Ende der Kolben (31) und/oder eine zweite Platte (13) mit einer Abkratzvorrichtung (18) von Partikelresten befreit werden.

10. Vorrichtung (1) zum Abscheiden von Partikeln, insbesondere Lackpartikeln, aus einem Luftstrom, umfassend mehrere Abscheidungslagen (2) mit jeweils mehreren Abscheidungselementen, welche als in sich geschlossene und voneinander beabstandete Bänder (3) ausgebildet sind, wobei die Bänder (3) zweier Abscheidungslagen (2) versetzt zueinander angeordnet sind, um den Luftstrom zwischen den Abscheidungslagen (2) umzulenken, **dadurch gekennzeichnet, dass** jede Abscheidungslage (2) zumindest eine Lagerung (4) umfasst, welche von mehreren Bändern (3) zumindest teilweise umschlossen ist.

11. Vorrichtung (1) nach Anspruch 10, **dadurch gekennzeichnet, dass** jede Abscheidungslage (2) zumindest eine Lagerung (4) für die Bänder (3) umfasst, wobei die Bänder (3) zumindest teilweise um die Lagerung (4) herum angeordnet sind.

12. Vorrichtung (1) nach einem der Ansprüche 1 bis 5 bzw. 10 oder 11, **dadurch gekennzeichnet, dass** ein Eingangsbereich (8) vorgesehen ist, über welchen der Luftstrom auf eine erste Abscheidungslage (2) trifft.

13. Verwendung einer Vorrichtung (1) nach einem der Ansprüche 1 bis 5 oder 10 bis 12 zum Abscheiden von Lackpartikeln von einem bei einem Fahrzeuglackiervorgang abgeführten Luftstrom.

14. Verfahren zum Abscheiden von Partikeln, insbesondere Lackpartikeln, aus einem Luftstrom, wobei die Partikel auf jeweils mehreren Abscheidungselementen von mehreren Abscheidungslagen (2) abgeschieden werden, **dadurch gekennzeichnet, dass** der Luftstrom über einen Abstand zwischen den als jeweils in sich geschlossene Bänder (3) ausgebildeten Abscheidungselementen durch die Abscheidungslagen (2) beschleunigt wird, wobei jede Abscheidungslage (2) zumindest eine Lagerung (4) umfasst, welche von mehreren Bändern (3) zumindest teilweise umschlossen ist, wobei eine Strömungsrichtung durch Versatz der Abscheidungslagen (2) verändert wird, wobei durch eine Drehung der Bänder an diesen haftende Partikel an ein unteres Ende der Vorrichtung befördert werden.

15. Verfahren nach einem der Ansprüche 6 bis 9 oder Anspruch 14, **dadurch gekennzeichnet, dass** der Luftstrom von einer endseitig angeordneten Saugvorrichtung (7) angesaugt wird.

16. Verfahren nach Anspruch 14 oder 15, **dadurch gekennzeichnet, dass** die Bänder (3) von einem Antrieb (5), insbesondere indirekt, in Drehung versetzt werden.

17. Verfahren nach einem der Ansprüche 14 bis 16, **dadurch gekennzeichnet, dass** Partikel mit einer Einrichtung (9) zum Entfernen von den Bändern (3) entfernt werden.

18. Verfahren nach einem der Ansprüche 14 bis 17, **dadurch gekennzeichnet, dass** der Luftstrom durch Abstände zwischen den Bändern (3) gesaugt wird, wobei die Partikel auf den Bändern (3) der Abscheidungslagen (2) abgeschieden werden.

## Claims

1. A device (1) for separating particles, in particular paint particles, from an air flow, comprising a plurality of separating layers (2) each having a plurality of separating elements, wherein the separating elements are constituted as elongated bars (31) and are arranged spaced apart from one another, wherein the bars (31) of two separating layers (2) are arranged offset with respect to one another, in order to deflect the air flow between the separating layers (2), **characterized in that** a paint-removing apparatus (11) is provided for cleaning the bars (31), which comprises pistons (14) movable along the bars (31) and the number of pistons (14) corresponds to the number of bars (31), wherein the bars (31) have an essentially U-shaped cross section in order to collect separated particles therein.

2. The device (1) according to claim 1, **characterized in that** the bars (31) are enclosed between two plates (12, 13).

3. The device (1) according to claim 2, **characterized in that** the pistons (14) are fixed at one end to a plate-shaped element (15), wherein the plate-shaped element (15) can be moved with the piston (14) in the direction of a first plate (12).

4. The device (1) according to claim 2 or 3, **characterized in that** a motor (16) and at least one shaft (17) are provided, wherein the motor (16) drives the shaft (17), in order to move the plate-shaped element (15) with the piston (14).

5. The device (1) according to any one of claims 2 to 4, **characterized in that** a scraping device (18) is arranged at the outer side on a second plate (13), wherein the scraping device (18) comprises at least one blade (19).

6. A method for separating particles, in particular paint particles, from an air flow, wherein the particles are deposited on, in each case, a plurality of separating elements of a plurality of separating layers (2), wherein the air flow is accelerated through the separating layers (2) via a gap between the separating elements each constituted as elongated bars (31), wherein a flow direction is changed by the separating layers (2), in particular by an offset thereof, **characterized in that** particles deposited on the bars (31) are removed by a paint-removing apparatus (11), wherein the air flow is sucked through gaps between the bars (31), wherein the particles are deposited on the bars (31) of the separating layers (2) and collected in an essentially U-shaped cross section of the bars (31), wherein the bars (31) are freed from the particles collected thereon by pistons (14) of the paint-removing apparatus (11) which can be moved along the bars (31).

7. The method according to claim 6, **characterized in that** a plate-shaped element (15) is moved with the pistons (14) fixed to the latter, in order to free the bars (31) from the particles deposited there.

8. The method according to claim 7, **characterized in that** at least one shaft (17) is driven by a motor (16), in order to move the plate-shaped element (15) with the pistons (14).

9. The method according to any one of claims 6 to 8, **characterized in that** an end of the pistons (31) and/or a second plate (13) are freed from particle residues by a scraping device (18).

10. A device (1) for separating particles, in particular paint particles, from an air flow, comprising a plurality of separating layers (2) each having a plurality of separating elements, which are constituted as bands (3), which are closed in themselves and spaced apart from one another, wherein the bands (3) of two separating layers (2) are arranged offset with respect to one another, in order to deflect the air flow between the separating layers (2), **characterized in that** each separating layer (2) comprises at least one bearing (4), which is enclosed at least partially by a plurality of bands (3).

11. The device (1) according to claim 10, **characterized in that** each separating layer (2) comprises at least one bearing (4) for the bands (3), wherein the bands (3) are arranged at least partially around the bearing (4) .

12. The device (1) according to any one of claims 1 to 5 or 10 or 11, **characterized in that** an entry region (8) is provided, via which the air flow strikes a first separating layer (2).

13. Use of a device (1) according to any one of claims 1 to 5 or 10 to 12 for separating paint particles from an air flow conducted away during a vehicle painting operation.

14. A method for separating particles, in particular paint particles, from an air flow, wherein the particles are deposited on, in each case, a plurality of separating elements of a plurality of separating layers (2), **characterized in that** the air flow is accelerated through the separating layers (2) via a gap between the separating elements each constituted as bands (3) closed in themselves, wherein each separating layer (2) comprises at least one bearing (4), which is enclosed at least partially by a plurality of bands, wherein a flow direction is changed by an offset of the separating layers (2), wherein, by a rotation of the bands, particles adhering to these bands are conveyed to a lower end of the device.

15. The method according to any one of claims 6 to 9 or claim 14, **characterized in that** the air flow is sucked by a suction device (7) arranged at an end side.

16. The method according to claim 14 or 15, **characterized in that** the bands (3) are caused to rotate, in particular indirectly, by a drive (5).

17. The method according to any one of claims 14 to 16, **characterized in that** particles are removed from the bands (3) with a device (9) for removal.

18. The method according to any one of claims 14 to 17, **characterized in that** the air flow is sucked through gaps between the bands (3), wherein the particles are deposited on the bands (3) of the separating layers (2) .

## Revendications

1. Dispositif (1) destiné à séparer des particules, notamment particules de peinture, d'un courant d'air, comprenant plusieurs couches de séparation (2) avec respectivement plusieurs éléments de séparation, les éléments de séparation état constitués comme des poutres longitudinales (31) et étant disposés à distance les uns des autres, les poutres (31) de deux couches de séparation (2) étant disposées décalées les unes par rapport aux autres pour dériver le courant d'air entre les couches de séparation (2), **caractérisé en ce qu'**un système à décaper la peinture (11) est prévu pour nettoyer les poutres (31), lequel comprend des pistons (14) déplaçables le long des poutres (31) et le nombre de pistons (14) correspondant au nombre de poutres (31), les poutres (31) comportant une section pour l'essentiel en forme de U pour collecter dans celle-ci les particules séparées.

2. Dispositif (1) selon la revendication 1, **caractérisé en ce que** les poutres (31) sont prises entre deux plaques (12, 13) .

3. Dispositif (1) selon la revendication 2, **caractérisé en ce que** les pistons (14) sont fixés avec une extrémité à un élément en forme de plaque (15), l'élément en forme de plaque (15) étant déplaçable avec le piston (14) en direction d'une première plaque (12) .

4. Dispositif (1) selon la revendication 2 ou 3, **caractérisé en ce qu'**un moteur (16) et au moins un arbre (17) sont prévus, le moteur (16) entraînant l'arbre (17) pour déplacer l'élément en forme de plaque (15) avec le piston (14).

5. Dispositif (1) selon l'une quelconque des revendications 2 à 4, **caractérisé en ce qu'**un dispositif de raclage (18) est disposé extérieurement sur une deuxième plaque (13), le dispositif de raclage (18) comprenant au moins une pale (19).

6. Procédé destiné à séparer des particules, notamment particules de peinture, d'un courant d'air, les particules étant séparées sur respectivement plusieurs éléments de séparation par plusieurs couches de séparation (2), le courant d'air étant accéléré par le biais d'un intervalle entre les éléments de séparation constitués comme respectivement des poutres longitudinales (31), une direction d'écoulement étant modifiée par les couches de séparation (2), notamment par déport de celles-ci, **caractérisé en ce que** les particules séparées sur les poutres (31) sont enlevées avec un dispositif à décaper la peinture (11), le courant d'air étant aspiré par les intervalles entre les poutres (31), les particules étant séparées sur les poutres (31) des couches de séparation (2) et étant collectées dans une section pour l'essentiel en forme de U des poutres (31), les poutres (31) étant débarrassées des particules amassées sur celles-ci par des pistons (14) déplaçables le long des poutres (31) du dispositif à décaper la peinture (11).

7. Procédé selon la revendication 6, **caractérisé en ce qu'**un élément en forme de plaque (15) est déplacé sur le piston (14) fixé sur celui-ci pour débarrasser les poutres (31) des particules qui s'y sont déposées.

8. Procédé selon la revendication 7, **caractérisé en ce qu'**un arbre (17) est entraîné par un moteur (16) pour déplacer l'élément en forme de plaque (15) avec le piston (14).

9. Procédé selon l'une quelconque des revendications 6 à 8, **caractérisé en ce qu'**une extrémité du piston (31) et/ou une deuxième plaque (13) sont débarrassés de restes de particules avec un dispositif de raclage (18) .

10. Dispositif (1) destiné à séparer des particules, notamment particules de peinture, d'un courant d'air, comprenant plusieurs couches de séparation (2) avec respectivement plusieurs éléments de séparation, lesquels sont constitués sous la forme de bandes (3) refermées sur elles-mêmes et à distance les unes des autres, les bandes (3) de deux couches de séparation (2) étant disposées décalées les unes par rapport aux autres pour dériver le courant d'air entre les couches de séparation (2), **caractérisé en ce que** chaque couche de séparation (2) comprend au moins un logement (4), lequel est entouré au moins en partie de plusieurs bandes (3).

11. Dispositif (1) selon la revendication 10, **caractérisé en ce que** chaque couche de séparation (2) comprend au moins un logement (4) pour les bandes (3), les bandes (3) étant disposées au moins en partie autour du logement (4).

12. Dispositif (1) selon l'une quelconque des revendications 1 à 5 ou bien 10 ou 11, **caractérisé en ce qu'**une zone d'entrée (8) est prévue à travers laquelle le courant d'air tombe sur une première couche de séparation (2).

13. Utilisation d'un dispositif (1) selon l'une quelconque des revendications 1 à 5 ou 10 à 12 destiné à la séparation de particules de peinture d'un courant d'air évacué lors d'une opération de peinture de véhicule.

14. Procédé destiné à la séparation de particules, notamment particules de peinture, d'un courant d'air, les particules étant séparées sur respectivement plusieurs éléments de séparation de plusieurs couches de séparation (2), **caractérisé en ce que** le courant d'air est accéléré à travers les couches de séparation (2) par le biais d'un intervalle entre les éléments de séparation constitués sous la forme de bandes (3) refermées respectivement sur elles-mêmes, chaque couche de séparation (2) comprenant au moins un logement (4), lequel est entouré au moins en partie de plusieurs bandes (3), une direction d'écoulement étant modifiée par déport des couches de séparation (2), par une rotation des bandes, les particules adhérant à celles-ci étant transportées à une extrémité inférieure du dispositif.

15. Procédé selon l'une quelconque des revendications 6 à 9 ou selon la revendication 14, **caractérisé en ce que** le courant d'air est aspiré par un dispositif d'aspiration (7) disposé en extrémité.

16. Procédé selon la revendication 14 ou 15, **caractérisé en ce que** les bandes (3) sont mises en rotation par un système d'entraînement (5), notamment indirectement.

17. Procédé selon l'une quelconque des revendications 14 à 16, **caractérisé en ce que** les particules sont enlevées des bandes (3) avec un dispositif (9) pour enlèvement.

18. Procédé selon l'une quelconque des revendications 14 à 17, **caractérisé en ce que** le courant d'air est aspiré par les intervalles entre les bandes (3), les particules étant séparées sur les bandes (3) des couches de séparation (2).
